Europäisches Patentamt

European Patent Office

Office européen des brevets

(11) Veröffentlichungsnummer: **0 417 530 A1**

# (12) EUROPÄISCHE PATENTANMELDUNG

(21) Anmeldenummer: 90116302.2

(51) Int. Cl.5: **B23B 9/04**

(22) Anmeldetag: 25.08.90

(30) Priorität: 11.09.89 DE 3930335

(43) Veröffentlichungstag der Anmeldung:
20.03.91 Patentblatt 91/12

(84) Benannte Vertragsstaaten:
CH DE ES FR GB IT LI

(71) Anmelder: INDEX-WERKE GMBH & CO. KG
HAHN & TESSKY
Plochinger Strasse 92
W-7300 Esslingen(DE)

(72) Erfinder: **Link, Helmut Friedrich**
**Obere Burgstrasse 43**
**W-7307 Aichwald 1(DE)**
Erfinder: **Trautmann, Günther Heinrch**
**Egelsberger Strasse 7**
**W-7312 Kirchheim-Nabern(DE)**

(74) Vertreter: **Hoeger, Stellrecht & Partner**
**Uhlandstrasse 14 c**
**W-7000 Stuttgart 1(DE)**

(54) Mehrspindeldrehautomat mit Anschlag.

(57) Um einen Mehrspindeldrehautomat mit einem Arbeitsraum, mit einer mehrere Spindeln in unterschiedlichen Spindelpositionen umfassenden Spindeltrommel, durch deren Drehung um eine Spindeltrommelachse die Spindeln in unterschiedlichen Spindelstationen eines Maschinengestells bringbar sind, mit einer mindestens einer Spindel zugeordneten Materialstangenvorschubeinrichtung und mit einem im Arbeitsraum angeordneten Anschlag, umfassend eine Anschlagfläche für eine Materialstange, derart zu verbessern, daß der Anschlag raumsparender angeordnet werden kann, wird vorgeschlagen, daß der Anschlag konzentrisch zur Spindeltrommelachse drehbar gelagert ist, und daß der Anschlag während eines Materialstangenvorschubs relativ zur Spindeltrommel in einer Ausgangsstellung feststellbar ist, in welcher die Anschlagfläche eine Vorschubrichtung der in der dieser Ausgangsstellung zugeordneten Spindelposition stehenden Materialstange schneidet.

FIG 1

EP 0 417 530 A1

## MEHRSPINDELDREHAUTOMAT MIT ANSCHLAG

Die Erfindung betrifft einen Mehrspindeldrehautomat mit einem Arbeitsraum, mit einer mehrere Spindeln in unterschiedlichen Spindelpositionen umfassenden Spindeltrommel, durch deren Drehung um eine Spindeltrommelachse die Spindeln in unterschiedlichen Spindelstationen des Maschinengestells bringbar sind, mit einer mindestens einer Spindel zugeordneten Matrialstangenvorschubeinrichtung und mit einem im Arbeitsraum angeordneten Anschlag, umfassend eine Anschlagfläche für die Materialstange.

Derartige Mehrspindeldrehautomaten sind beispielsweise aus der DE-OS 25 19 598 bekannt.

Bei diesen ist der Anschlag maschinengestellfest angeordnet und kann in eine entsprechende Position eingefahren werden, wobei der Anschlag eine Anschlagfläche aufweist, die sich über einen bestimmten Winkelbereich der Schwenkbewegung der Spindeltrommel erstreckt, so daß während des Schaltens der Spindeltrommel die Materialstange zugeführt werden kann.

Derartige Anschläge haben den Nachteil, daß sie viel Platz im Arbeitsraum benötigen und aufgrund der Erstreckung der Anschlägfläche über einen bestimmten Winkelbereich selbst eine große Flächenausdehnung haben und somit die Bearbeitung der Werkstücke durch Werkzeugträger im Arbeitsraum nachteilig beeinträchtigen.

Der Erfindung liegt daher die Aufgabe zugrunde, einen Mehrspindeldrehtautomat der eingangs beschriebenen Art dadurch zu verbessern, daß der Anschlag raumsparender angeordnet werden kann.

Diese Aufgabe wird bei einem Mehrspindeldrehautomat der eingangs beschriebenen Art erfindungsgemäß dadurch gelöst, daß der Anschlag konzentrisch zur Spindeltrommelachse drehbar gelagert ist, und daß der Anschlag während eines Materialstangenvorschubs relativ zur Spindeltrommel in einer Ausgangsstellung feststellbar ist, in welcher die Anschlagfläche eine Vorschubrichtung der in der dieser Ausgansstellung zugeordneten Spindelposition stehenden Materialstange schneidet.

Der Vorteil einer drehbaren Lagerung des Anschlags konzentrisch zur Spindeltrommelachse ist darin zu sehen, daß die Lagerung des Anschlags im Bereich der Spindeltrommelachse nicht stört, vor allem das Arbeiten mit den den einzelnen Spindelstationen zugeordneten Werkzeugen nicht behindert, daß der Anschlag mit der Spindeltrommel mitgedreht werden kann, und daß außerdem auch die Möglichkeit besteht, den Anschlag in nicht störende Zwischenstellungen zwischen den Spindelpositionen zu bringen.

Darüberhinaus ist es zweckmäßigerweise vorgesehen, daß der Anschlag in einer ersten Spindelstation in die Ausgangsstellung überführbar ist. Das heißt, daß das Überführen des Anschlags in die Ausgangsstellung stets in einer ersten Spindelstation erfolgt.

Um eine Bearbeitung der Werkstücke in den Spindelpositionen nicht zu verhindern, ist zweckmäßigerweise vorgesehen, daß der Anschlag mit der Anschlagfläche in einer Zwischenstellung zwischen zwei Spindelpositionen feststellbar ist.

Eine Verschwenkung des Anschlags zwischen der Zwischenstellung und der Ausgangsstellung erfolgt vorzugsweise durch einen Rückstellantrieb, mit welchem der Anschlag bewegbar ist.

Darüberhinaus ist es auch zweckmäßig, wenn der Anschlag mittels des Rückstellantriebs in der Zwischenstellung feststellbar ist, um die Spindelpositionen zur Bearbeitung der Werkstücke freizugeben.

Als besonders zweckmäßig hat es sich im Rahmen der erfindungsgemäßen Lösung erwiesen, wenn eine Drehbewegung des Anschlags mit der Drehung der Spindeltrommel synchronisierbar ist. Dies ist ein entscheidender Vorteil des erfindungsgemäßen Konzepts, da damit die Anschlagfläche im Prinzip punktförmig ausgeführt werden kann und trotzdem während einer Drehung der Spindeltrommel ein Materialstangenvorschub erfolgen kann, so daß ein Auftreffen während der gesamten Zeit des Drehens der Spindeltrommel möglich ist. Damit entfällt insbesondere eine genaue Synchronisierung des Materialstangenvorschubs mit der Spindeltrommelschaltung. Vorzugsweise ist die Anschlagfläche so groß gewählt, daß diese maximal einer Querschnittsfläche der Materialstange entspricht.

Am günstigsten ist es hierbei, wenn die Drehbewegung des Anschlags mit der Drehung der Spindeltrommel in Schaltrichtung synchronisierbar ist.

Besonders bevorzugt im Rahmen der erfindungsgemäßen Lösung ist ein Ausführungsbeispiel, bei welchem der Anschlag in der Ausgangsstellung aus der ersten Spindelstation heraus in Richtung der nächstfolgenden zweiten Spindelstation synchron mit der Spindeltrommel drehbar ist. Damit kann beispielsweise bereits während der noch stillstehenden Spindeltrommel ein Starten des Materialstangenvorschubs erfolgen und es muß lediglich sichergestellt sein, daß der Materialstangenvorschub während der Zeit erfolgt, während welcher der Anschlag in Ausgangsstellung steht, wobei dies zu beliebigen Zeitpunkten während der Spindelschaltung, das heißt also der Drehung der Spindeltrommel, erfolgen kann.

Um den Anschlag nicht beliebig mitzudrehen, ist vorgesehen, daß der Anschlag bis zu einer Endstation drehbar ist, wobei diese Endstation eine im Maschinengestell fest angeordnete Endstation ist.

Zweckmäßigerweise ist die Lage der maschinengestellfesten Endstation so gewählt, daß die Endstation maximal in der nächstfolgenden Spindelstation liegt, das heißt also, daß eine Drehung des Anschlags maximal von einer Spindelstation zur nächsten erfolgt.

Beispielsweise ist es denkbar, daß die Endstation in der nächstfolgenden Spindelstation liegt. Es ist aber auch denkbar, daß die Endstation vor der nächstfolgenden Spindelstation, insbesondere mittig zwischen der ersten und der nächstfolgenden Spindelstation, liegt.

Im Rahmen der erfindungsgemäßen Ausführungsbeispiele ist es besonders zweckmäßig, wenn die synchrone Drehung von Anschlag und Spindeltrommel bei Erreichen der Endstation beendbar ist. Da die Endstation eine maschinengestellfest angeordnete Position des Anschlags ist und die Zwischenstellung bezogen auf die Spindelposition definiert ist, können die Endstation und die Zwischenstellung auseinanderliegend angeordnet sein oder identisch sein. Auf jeden Fall ist es günstig, wenn der Anschlag bei Erreichen der Endstation in die Zwischenstellung überführbar ist, um einem nachfolgenden Bearbeitungsschritt der Werkstücke in allen Spindelpositionen nicht hinderlich im Wege zu stehen.

Zweckmäßigerweise ist bei einem bevorzugten Ausführungsbeispiel ein Rückstellantrieb zum Drehen des Anschlags von der Endstation in die vorausgehende Spindelstation vorgesehen, so daß der Anschlag in dieser wieder seine Ausgangsstellung einnehmen kann und als Anschlag für den Materialstangenvorschub der in dieser ersten Spindelstation stehenden nächsten Spindel dienen kann.

Als konstruktiv zweckmäßig hat sich dabei eine Lösung erwiesen, bei welcher der Rückstellantrieb hydraulisch arbeitet.

Um die Drehung der Spindeltrommel in vorteilhafter Weise ausnützen zu können und insbesondere um eine synchrone Drehung des Anschlags mit der Spindeltrommel zu erreichen, sieht eine konstruktiv einfache Lösung vor, daß die synchrone Drehung des Anschlags durch eine Klauenkupplung zwischen diesem und der Spindeltrommel erfolgt.

In Verbindung mit dem Rückstellantrieb hat es sich dabei als vorteilhaft erwiesen, wenn die Klauenkupplung bei Betätigung des Rückstellantriebs ausrückbar ist, so daß der Rückstellantrieb zur Bewegung des Anschlags entgegengesetzt zur Schaltrichtung der Spindeltrommel dient und die Bewegung des Anschlags in Schaltrichtung der Spindeltrommel durch eine synchrone Bewegung, erzwungen durch die eingerückte Klauenkupplung, erfolgt.

Die eingerückte Stellung der Klauenkupplung läßt sich am einfachsten dadurch sicherstellen, daß die Klauenkupplung in Richtung einer eingekuppelten Stellung federbeaufschlagt ist.

Bei den bislang beschriebenen Ausführungsbeispielen wurden hinsichtlich der Art der Lagerung des Anschlags keine näheren Ausführungen gemacht. So ist es besonders vorteilhaft, wenn der Anschlag auf einem Zentralrohr der Spindeltrommel gelagert ist, welches sich insbesondere durch den Arbeitsraum hindurch erstreckt.

Die Lagerung des Anschlags erfolgt dabei konstruktiv am einfachsten dadurch, daß der Anschlag von einem das Zentralrohr umgebenden Schwenkrohr getragen ist, wobei beispielsweise dieses Schwenkrohr einen Anschlagarm hält, welcher die Anschlagfläche trägt.

Auch hinsichtlich der Art der Ausbildung des Rückstellantriebs wurden bei den bislang beschriebenen Ausführungsbeispielen keine näheren Angaben gemacht. So ist es besonders vorteilhaft, wenn der Rückstellantrieb eine Kurvenbahn und einen Bahnfolger umfaßt, welche zum Drehen des Anschlags aufeinanderzu bewegbar sind. Um mit einem der art ausgebildeten Rückstellantrieb definierte Positionen anfahren zu können, ist vorteilhafterweise vorgesehen, daß die Kurvenbahn einen definierten Tiefstpunkt für den Bahnfolger aufweist.

Eine konstruktiv kompakte Lösung läßt sich dadurch erreichen, daß die Kurvenbahn um die Spindeltrommelachse herum verläuft und einen in Richtung der Spindeltrommelachse variablen Kurvenverlauf aufweist.

Im einfachsten Fall ist dabei vorgesehen, daß die Kurvenbahn an einem Kurventräger angeordnet ist, wobei insbesondere der Kurventräger ein konzentrisch zur Spindeltrommelachse verlaufender Ring ist.

Eine konstruktiv bevorzugte Lösung ist so ausgeführt, daß der Kurventräger drehfest, jedoch in Richtung der Spindeltrommelachse verschieblich mit dem Anschlag verbunden ist. Diese Verbindung ist im einfachsten Fall dadurch herstellbar, daß der Kurventräger drehfest, jedoch in Richtung der Spindeltrommelachse verschieblich mit dem Schwenkrohr verbunden ist.

Eine weitere konstruktive Vereinfachung ist auch noch dadurch erreichbar, daß der Kurventräger ein Element der Klauenkupplung trägt, wobei das andere Element der Klauenkupplung vorzugsweise am Zentralrohr angeordnet ist.

Hinsichtlich der Art und Weise wie der Bahnfolger selbst angeordnet sein soll, wurden im vorstehenden keine näheren Angaben gemacht. Beispielsweise könnte der Bahnfolger selbst ebenfalls mit der Spindeltrommel drehbar sein. Besonders zweckmäßig ist eine Lösung, bei welcher der Bahnfolger maschinengestellfest angeordnet ist. Zur Betätigung des Bahnfolgers hat es sich als günstig erwiesen, wenn dieser an einen Ende eines Hydraulikkolbens angecrdnet ist.

Dieser Hydraulikkolben ist zweckmäßigerweise in einem um die Spindeltrommelachse herum verlaufenden Gehäusering gelagert, welcher bei einer besonders kompakt bauenden Ausführungsform in Fortsetzung des Zentralrohrs angeordnet ist.

Im Rahmen der bisherigen Ausführungen zu vorteilhaften Ausführungsformen der vorliegenden Erfindung wurde nicht festgelegt, wieviele Bahnfolger vorgesehen sein sollen. Im einfachsten Fall reicht ein Bahnfolger, um den Anschlag von der Endstation in die erste Spindelposition zurückzubewegen.

In all den Fällen, in denen jedoch noch eine Zwischenstellung erreicht werden soll, ist es besonders zweckmäßig, wenn zwei Bahnfolger in einem Winkelabstand voneinander angeordnet sind, so daß mit diesen im Zusammenwirken mit der Kurvenbahn beispielsweise auch eine Positionierung des Anschlags in der Zwischenstellung, gesteuert durch den Rückstellantrieb, erfolgen kann.

Eine besonders bevorzugte Variante sieht dabei vor, daß der Winkelabstand dem halben Winkelabstand der Spindelpo sitionen entspricht, so daß sich beispielsweise eine mittig zwischen den Spindelpositionen liegende Zwischenstellung mit diesem Rückstellantrieb anfahren läßt.

Im einfachsten Fall ist die Kurvenbahn so ausgebildet, daß sie in wesentlichen V-förmig zueinander angeordnete Schrägflächen aufweist.

In Kombination mit der Anordnung der Bahnfolger sind die äußersten Enden der Schrägflächen der Kurvenbahn zweckmäßigerweise so angeordnet, daß sie einen Winkelabstand voneinander aufweisen, welcher mindestens dem Winkelabstand der Spindelpositionen entspricht.

Zusätzlich hat es sich dabei als sinnvoll erwiesen, wenn die äußersten Enden der Schrägflächen einen Winkelabstand aufweisen, welcher kleiner als der doppelte Winkelabstand der Spindelpositionen ist.

Eine weitere vorteilhafte Ausgestaltung der Erfindung sieht vor, daß die Zahl der Anschläge der Zahl der mit einer Materialstangenvorschubeinrichtung versehenen Spindeln entspricht.

Insbesondere ist es zweckmäßig, wenn die Anschläge auf einem gemeinsamen Anschlagträger sitzen.

Weitere Merkmale und Vorteile sind Gegenstand der nachfolgenden Beschreibung sowie der zeichnerischen Darstellung eines Ausführungsbeispiels in mehreren Varianten. In der Zeichnung zeigen:

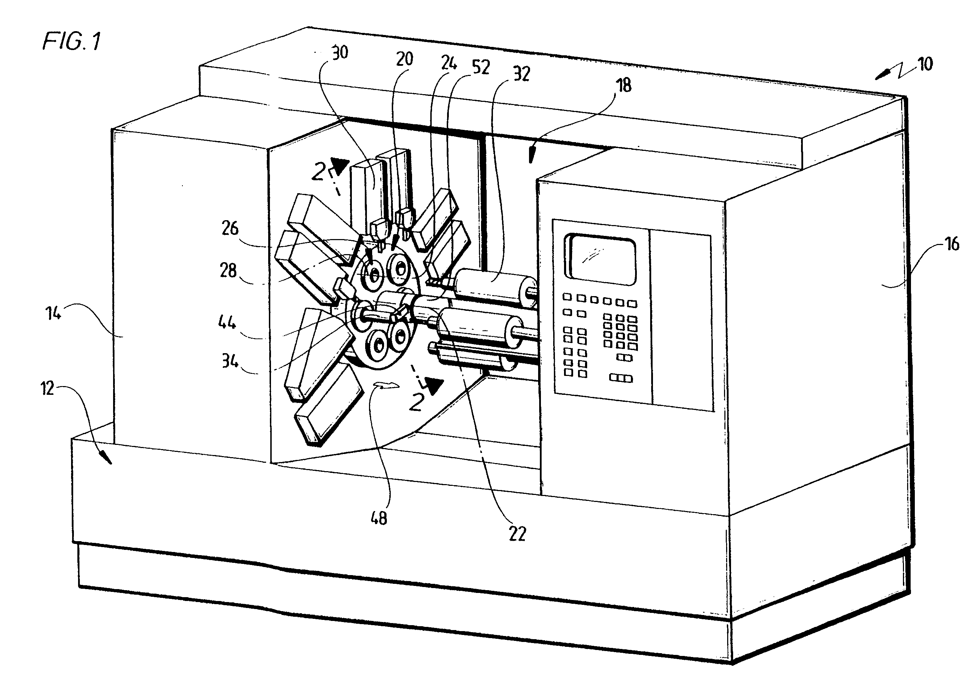

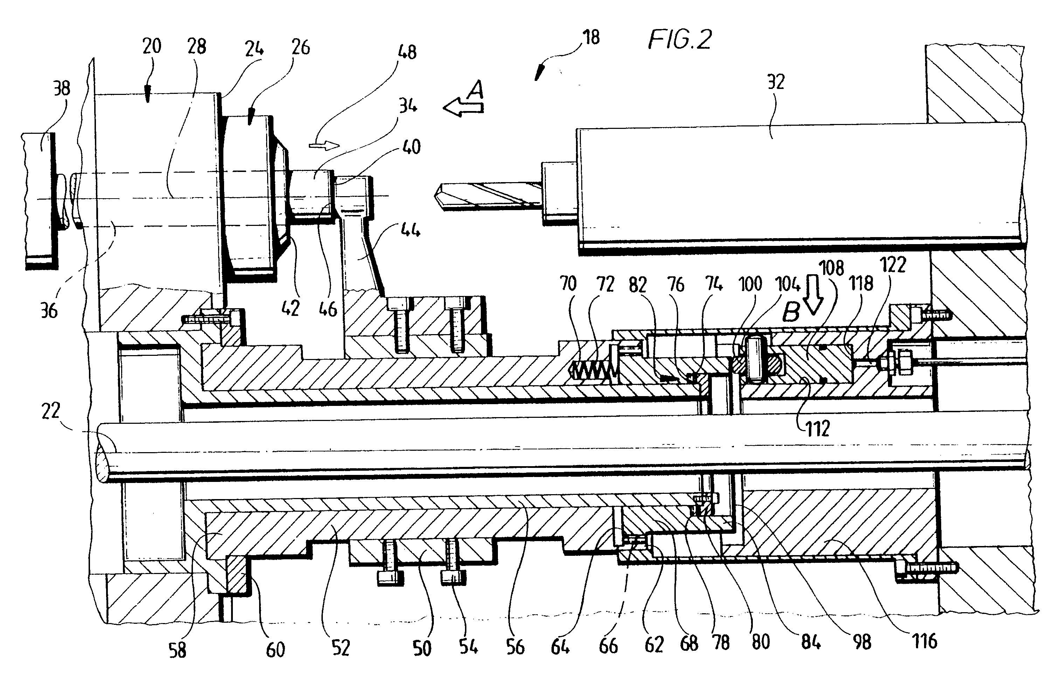

Fig. 1 eine perspektivische Ansicht eines erfindungsgemäßen Mehrspindeldrehautomaten;

Fig. 2 einen Schnitt längs Linie 2-2 in Fig. 1;

Fig. 3 bis 6 eine teilweise geschnittene Draufsicht in Richtung des Pfeils A in Fig. 2, kombiniert mit einer Draufsicht auf die Spindeltrommel in Richtung des Pfeils B in Fig. 2, mit in Ausgangsstellung stehendem Anschlagarm während einer Spindeltrommelschaltung von der ersten Spindelstation I zur zweiten Spindelstation II, dargestellt in den Fig. 3 und 4, einer Zwischenstellung des Anschlagarmes, dargestellt in Fig. 5, und einer Rückstellung des Anschlagarms zur Ausgangsstellung in der ersten Spindelposition I, dargestellt in Fig. 6.

Fig. 7 bis 9 eine Darstellung ähnlich Fig. 3 bis 6 einer zweiten Betätigungsweise des Mehrspindeldrehautomaten gemäß Fig. 1 bis 6 und in den

Fig. 10 bis 12 eine Darstellung ähnlich Fig. 3 bis 6 einer Betätigung einer Variante des ersten Ausführungsbeispiels, bei welcher keine Synchronbewegung des Anschlagarms mit einer Spindeltrommel erfolgt.

Ein als Ganzes mit 10 bezeichnetes Ausführungsbeispiel eines erfindungsgemäßen Mehrspindeldrehautomaten umfaßt ein Maschinengestell 12 mit einem Spindeltrommelgehäuse 14 und einem diesem gegenüberliegenden Steuerungsgehäuse 16, zwischen denen ein Arbeitsraum 18 angeordnet ist. In dem Spindeltrommelgehäuse 14 ist eine als Ganzes mit 20 bezeichnete Spindeltrommel um eine Spindeltrommelachse 22 drehbar gelagert und so angeordnet, daß sie mit einer Stirnseite 24 dem Arbeitsraum 18 zugewandt ist.

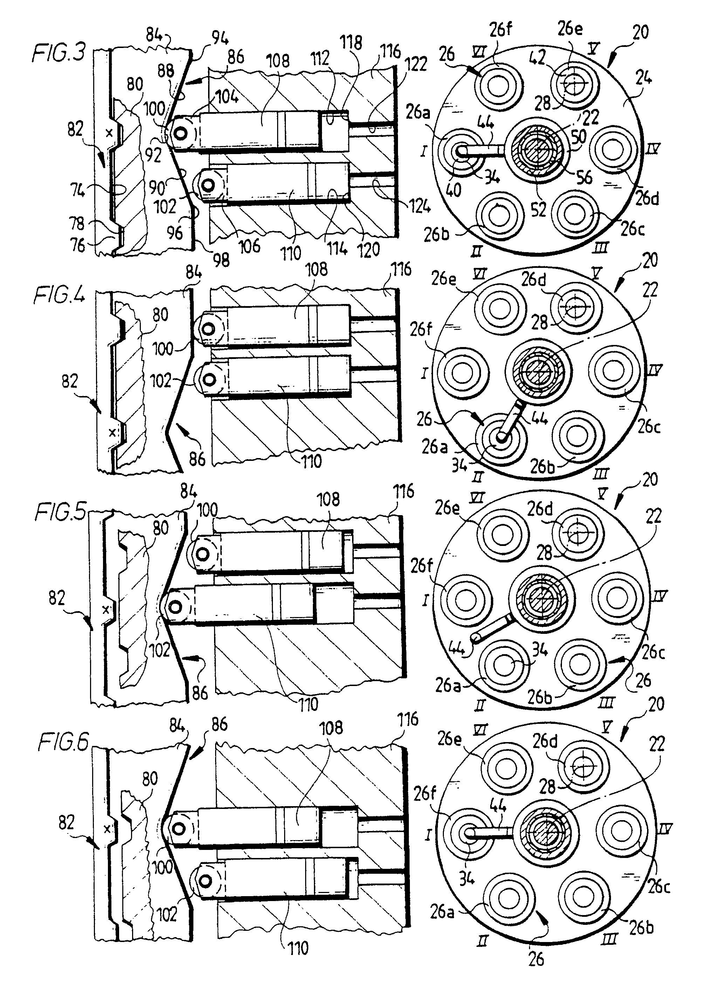

In dieser Spindeltrommel 20 sind mehrere Spindeln 26 so gelagert, daß deren Spindelachse 28 parallel zur Spindeltrommelachse 22 verläuft. Im zeichnerisch dargestellten Ausführungsbeispiel sind insgesamt sechs Spindeln 26, wie in den Fig. 3 bis 6 dargestellt, in insgesamt sechs im gleichen Winkelabstand um die Spindeltrommelachse 22 und im gleichen radialen Abstand von der Spindelachse 22 liegenden Spindelpositionen 26a bis 26f angeordnet.

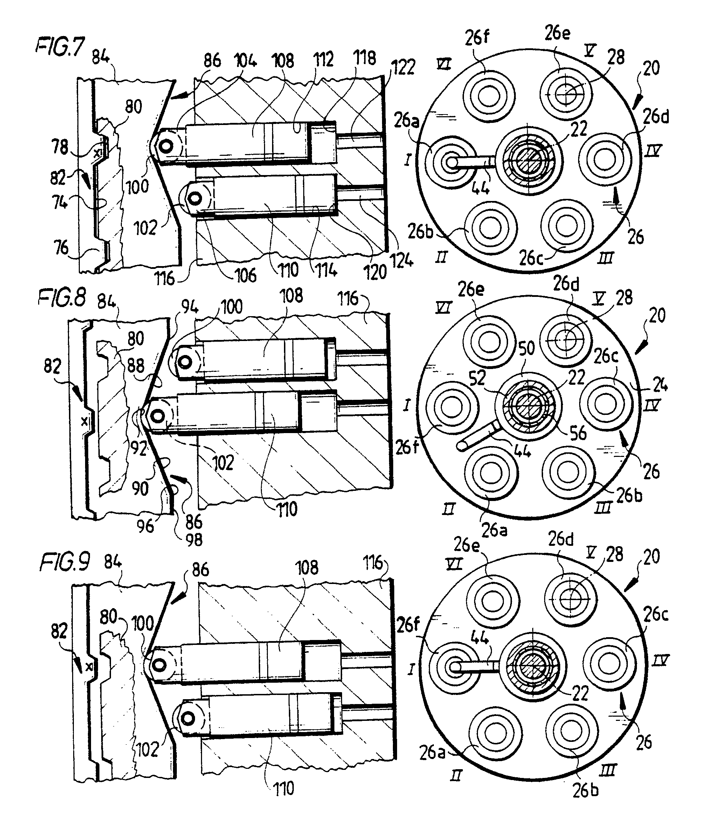

Durch Drehen der Spindeltrommel 20 und der Spindeltrommelachse 22 können nun die einzelnen Spindelpositionen nachfolgend in unterschiedliche maschinengestellfest angeordnete Spindelstationen I bis VI gebracht werden. Beispielsweise steht in Fig. 3 die Spindelposition 26a in der Spindelstation I, wohingegen in Fig. 4 die Spindelposition 26a in der Spindelstation II steht.

In dem Arbeitsraum 18 sind jeder Spindelstation ein oder mehrere Werkzeugträger 30 bzw. 32 zugeordnet, welche vorzugsweise als Längs- oder Kreuzschlitten ausgebildet sind.

In mindestens einer Spindelstation I bis VI erfolgt eine Zuführung eines neuen, zu bearbeitenden Werkstücks 34, durch eine sich koaxial durch die jeweilige Spindel 26 hindurch erstreckende Materialstange 36, welche durch eine Materialstangenvorschubeinrichtung 38 jeweils mit einem vorderen Ende 40 so weit über eine Stirnseite 42 der jeweiligen Spindel 26 vorgeschoben wird, daß ein neues Werkstück 34, von der Stirnseite 42 der Spindel 26 ausgehend und sich in Richtung der Spindelachse 28 erstreckend, im Arbeitsraum 18 zur Bearbeitung zur Verfügung steht.

Um die Länge des Werkstücks 34 in Richtung der Spindelachse 28 definiert festlegen zu können, ist im Arbeitsraum 18 an einem Anschlagarm 44 eine Anschlagfläche 46 vorgesehen, welche sich in einer in Fig. 2 gezeichneten Ausgangsstellung quer zu einem Vorschubweg der Materialstange 36 und diesen schneidend erstreckt, so daß beim Vorschieben der Materialstange 36 in Vorschubrichtung 48 das vordere Ende 40 auf der Anschlagfläche 46 auftrifft und somit eine Weiterbewegung der Materialstange 36 in der Vorschubrichtung 48 unterbunden ist.

Die Materialstangenvorschubeinrichtungen 38 sind beispielsweise als hydraulische Materialstangenvorschubeinrichtungen 38 ausgebildet, welche die Materialstange 36 stets mit einer konstanten Kraft beaufschlagen.

Die Länge des neuen Werkstücks 34 wird somit bestimmt durch den Abstand der Anschlagfläche 46 von der Stirnseite 42 der jeweiligen Spindel 26.

Der Anschlagarm 44 wird seinerseits getragen von einem Anschlagträgerring 50, welcher in Richtung der Spindeltrommelachse 22 in unterschiedlichen Positionen festlegbar auf einem Schwenkrohr 52 gehalten ist. Zum Festlegen des Anschlagträgerrings 50 auf dem Schwenkrohr 52 sind beispielsweise Stellschrauben 54 vorgesehen, mit welchen der Anschlagträgerring 50 kraftschlüssig auf dem Schwenkrohr 52 fixierbar ist.

Das Schwenkrohr 52 ist seinerseits getragen von einem Zentralrohr 56, welches drehfest mit der Spindeltrommel 20 verbunden ist und sich koaxial zur Spindeltrommelachse 22 von dem Spindeltrommelgehäuse 14 in Richtung des Steuerungsgehäuses 16 erstreckt. Das Schwenkrohr 52 liegt dabei mit einer inneren Zylindermantelfläche unmittelbar auf einer äußeren Zylindermantelfläche des Zentralrohrs 56 auf und umfaßt einen Flanschansatz 58 auf seiner dem Spindeltrommelgehäuse 14 zugewandten Seite, welcher sich radial zur Spindeltrommelachse 22 nach außen erstreckt und einen das Schwenkrohr 52 umgebenden Ringflansch 60 hintergreift, welcher den Flanschansatz 58 zwar um die Spindeltrommelachse 22 drehbar, jedoch in Richtung derselben unverschieblich relativ zum Zentralrohr 56 festlegt und somit auch den mit den Stellschrauben 54 kraftschlüssig auf dem Schwenkrohr 52 gehaltenen Anschlagträgerring 50 mitsamt dem Anschlagarm 44 und der Anschlagfläche 46 unverschieblich in Richtung der Spindelachse 22 hält.

An seinem dem Steuerungsgehäuse 16 zugewandten Ende 62 ist das Schwenkrohr 52 mit einer Innenverzahnung 64 versehen, in welche eine Außenverzahnung 66 eines Kurventrägers 68 eingreift, der seinerseits in Fortsetzung des Schwenkrohrs 52 drehbar auf dem Zentralrohr 56 gelagert ist. Der Kurventräger 68 ist dabei in Richtung der Spindeltrommelachse 22 relativ zum Schwenkrohr 52 verschieblich, jedoch drehfest mit diesem verbunden.

Parallel zur Spindelachse 22 sich erstreckende und und zum Steuerungsgehäuse 16 hin offene Sacklöcher 70 nehmen Federn 72 auf, die sich am Schwenkrohr 52 abstützen und den Kurventräger 68 in Richtung des Steuerungsgehäuses 16 beaufschlagen.

An seiner dem Steuerungsgehäuse 16 zugewandten und unmittelbar sich in radialer Richtung an das Zentralrohr 56 anschließenden Ringflanschfläche 74 trägt der Kurventräger 68 in Richtung des Steuerungsgehäuses 16 weisende Zähne 76, welche mit entsprechend geformten Ausnehmungen 78 eines an dem dem Steuerungsgehäuse 16 zugewandten Ende angeordneten und radial nach außen über das Zentralrohr 56 überstehenden Begrenzungsflansches 80 in Eingriff bringbar sind.

Die Zähne 76 und die Ausnehmungen 78 bilden dabei eine Klauenkupplung 82, mit welcher eine drehfeste Verbindung zwischen dem Zentralrohr 56, dem drehfest mit diesem verbundenen Begrenzungsflansch 80 und dem Kurventräger 68 und damit auch dem Schwenkrohr 52 herstellbar ist. Durch diese Klauenkupplung 82 besteht somit de Möglichkeit, den Anslagarm 44 synchron zur Drehung der Spindeltrommel 20 zu verschwenken.

Durch die Verschiebbarkeit des Kurventrägers 68 relativ zum Schwenkrohr 52 aufgrund der Außen- und Innenverzahnungen 66, 64 besteht die Möglichkeit, den Kurventräger 68 so weit in Richtung des Spindeltrommelgehäuses 14 zu verschieben, daß die Klauenkupplung 82 außer Eingriff kommt und somit die drehfeste Verbindung zwischen dem Zentralrohr 56 und dem Schwenkrohr 52 gelöst ist.

Radial außenliegend der Ringflanschfläche 74 ist ein sich über diese hinweg in Richtung der Spindeltrommelachse 22 auf das Steuerungsgehäuse 16 zu erstreckender Kurvenring 84 vorgesehen, welcher, wie in den Fig. 3 bis 6 dargestellt, eine Kurvenbahn 86 aufweist, die einen in Richtung der Spindeltrommelachse 22 variablen Kurvenverlauf aufweist und sich rings um die Spindeltrommelachse 22 erstreckt. Die Kurvenbahn 86 umfaßt, wie in den Fig. 3 bis 6 dargestellt, zwei V-förmig zueinander verlaufende Schrägflächen 88 und 90, welche in einem Tiefstpunkt 92 in einander übergehen und mit ihren äußersten Enden 94 und 96 in eine senkrecht zur Spindeltrommelachse 22 verlaufende Stirnfläche 98 des Kurvenrings 84 übergehen.

Die Kurvenbahn 86 ist dabei dem Steuerungsgehäuse 16 zugewandt.

Mit dieser Kurvenbahn 86 sind als Bahnfolger zwei Bahnfolgerrollen 100 und 102 in Wechselwirkurg bringbar, welche jeweils an einem hinteren, dem Spindeltrommelgehäuse 14 zugewandten Ende 104, 106 eines Hydraulikkolbens 108, 110 angeordnet sind. Jeder der Hydraulikkolben 108 und 110 ist in einer parallel zur Spindeltrommelachse 22 verlaufenden Kolbenbohrung 112, 114 in einem Gehäusering 116 gelagert, welcher seinerseits steuergehäuseseitig im Arbeitsraum 18 an dem Maschinengestell 12 montiert ist.

Die Hydraulikkolben 108, 110 stehen dabei mit ihren Bahnfolgerrollen 100 und 102 jeweils über eine dem Spindeltrommelgehäuse 14 zugewandte Stirnfläche 116 in Richtung der Kurvenbahn 86 über, so daß die Kolbenbohrungen 112 und 114 zu dieser Seite hin offen sind.

An ihrem gegenüberliegenden, dem Steuerungsgehäuse 16 zugewandten Ende 118 und 120 mündet in die Kolbenbohrungen 112 und 114 jeweils ein Hydraulikkanal 122 bzw. 124, durch welchen ein Hydraulikmedium in die Kolbenbohrungen 112 bzw. 114 einbringbar ist, so daß die Hydraulikkolben 108 und 110 hierdurch in Richtung der Kurvenbahn 86 oder entgegengesetzt dazu bewegbar sind.

Vorzugsweise sind die Kolbenbohrungen 112 und 114 im gleichen radialen Abstand von der Spindeltrommelachse 22 angeordnet und weisen einen Winkelabstand voneinander auf, welcher dem halben Winkelabstand jeweils aufeinanderfolgender Spindelpositionen 26a bis f der Spindeltrommel 20 entspricht. Bei in den Fig. 3 bis 6 gezeichneten Ausführungsbeispielen beträgt der Winkelabstand der Kolbenbohrungen 112 und 114 30° bei einem Winkelabstand aufeinanderfolgender Spindelpositionen 26a, 26f von 60°.

Die Schrägflächen 88 und 90 der Kurvenbahn 86 haben dabei mit ihren äußersten Enden 94 und 96 einen Winkelabstand von etwas mehr als 60°, das heißt einen Winkelabstand, der geringfügig größer als der aufeinanderfolgender Spindelpositionen 26a bis f ist.

Wie in den Fig. 3 bis 6 dargestellt, kann mit der erfindungsgemäßen Werkzeugmaschine folgendermaßen gearbeitet werden:

Steht die Spindeltrommel 20 mit der Spindelposition 26a in der Spindelstation I, so wird der Anschlagarm 44 mit der Anschlagfläche 46 so vor die Spindel 26 bewegt, daß die Anschlagfläche 46 die Vorschubrichtung (48) der Materialstange 36 schneidet. Der Anschlagarm 44 steht somit in der Ausgangsstellung und bildet einen Vorschubanschlag für die Vorschubbewegung der Materialstange 36.

Anschließend erfolgt ein Weiterschalten der Spindeltrommel 20, so daß die Spindelposition 26a in der Spindelstation II steht, wie in Fig. 4 dargestellt. Hierzu werden die beiden Hydraulikkolben 108 und 110 in ihre zurückgezogene Stellung gefahren, das heißt die Bahnfolger 100 und 102 sind nicht in Kontakt mit der Kurvenbahn 86. Dadurch ist über die Federn 72 der Kurventräger 68 in Richtung des Steuerungsgehäuses 16 beaufschlagt und die Klauenkupplung 82 in Eingriff, so daß die Zähne 76 in die Ausnehmungen 78 eingreifen. Das heißt, daß während der Spindeltrommelschaltung der Spindelposition 26a von der Spindelstation I zur Spindelstation II der Anschlagarm 44 synchron mit der Spindeltrommel 20 mitgedreht wird und auch in der Spindelstation II, welche eine Endstation für die Schwenkbewegung des Anschlagarms 44 darstellt, die Anschlagfläche 46 nach wie vor der in der Spindelposition 26a sitzenden Spindel 26 steht und die Vorschubrichtung der Materialstange 36 schneidet. Somit ist der Anschlagarm 44 auch nach der Spindeltrommelschaltung in der Ausgangsstellung.

Die Hydraulikkolben 108 und 110 sind relativ zur Kurvenbahn 86 so angeordnet, daß bei in Spindelstation I stehender Spindelposition 26a der Tiefstpunkt 92 mit dem Bahnfclger 100 fluchtend ausgerichtet ist. Da nach der Spindeltrommelschaltung die Spindelposition 26a an der Spindelstation II steht, erfolgte eine Drehung um 60°. Da der Abstand des äußersten Endes 94 vom Tiefstpunkt 92 die Hälfte des Abstands der äußersten Enden 94 und 96 der Schrägflächen 88 und 90 beträgt und somit dieser Winkelabstand größer als 30° ist, hat in der in Fig. 4 dargestellten Stellung der Bahnfolger 102 noch die Möglichkeit, die Schrägfläche 88 zwischen deren äußerstem Ende 94 und dem Tiefstpunkt 92 zu beaufschlagen und außerdem hat der Bahnfolger 102 von dem Tiefstpunkt 92 einen Winkelabstand von 30°. Wird der Hydraulikkolben 110 in Richtung der Kurvenbahn 96 bewegt, beaufschlagt er zum einen die Schrägfläche 88, was jedoch so lange nicht zu einer Relativdrehung des Kurventrägers 68 führt, solange die Klauenkupplung 82 in Eingriff ist. Da jedoch durch Beaufschlagung des Kurventrägers 68 in Richtung der Spindeltrommelachse 22 und in Richtung des Spindeltrommelgehäuses 14 auch gleichzeitig die Klauenkupplung 82 ausrückbar ist, bewirkt der Hydraulikkolben 110 ein Verschieben des Kurventrägers 68 in Richtung auf das Spindeltrommelgehäuse 14 und somit zunächst ein Ausrücken der Klauenkupplung 82 und anschließend aufgrund der Schrägfläche 88 eine Drehung des Kurventrägers 68, und zwar so weit, bis die Bahnfolgerrolle 102 im Tiefstpunkt 92 der Kurvenbahn 86 steht.

Da der Winkelabstand der Bahnfolgerrolle 102 von dem Tiefstpunkt 92, wie in Fig. 4 dargestellt, 30° betragen hatte, führt das Erreichen des Tiefstpunktes 92 durch die Bahnfolgerrolle 102, wie in Fig. 5 dargestellt, zu einer Rückdrehung des Anschlagarms 44 um 30°. Damit liegt der Anschlagarm 44 in einer Zwischenstellung zwischen den Spindelpositionen 26a und 26f. Ohne daß nun die Spindeltrommel 20 weitergedreht wurde, besteht, wie in Fig. 5 dargestellt, nun die Möglichkeit, in allen Spindelpositionen 26a bis f Bearbeitungen der Werkstücke 34 durchzuführen und beispielsweise das in der Spindelposition 26f und der Spindelstation I stehende Werkstück 34 abzustechen und entweder zu entnehmen oder für eine Weiterbearbeitung umzusetzen.

Nach diesen Bearbeitungsschritten erfolgt ein weiteres Zurückschwenken des Anschlagarms 44 in die Spindelstation I, und zwar in eine Ausgangsstellung vor der Spindelposition 26f.

Hierzu wird nach Erreichen des Tiefstpunktes 92 durch die Bahnfolgerrolle 102 der Hydraulikkolben 108 betätigt und der Hydraulikkolben 110 zurückgezogen, was dazu führt, daß die Bahnfolgerrolle 100 ebenfalls auf der Schrägfläche 88 zur Anlage kommt, den Kurventräger 68 nach wie vor in Richtung auf das Spindeltrommelgehäuse 14 beaufschlagt und gleichzeitig eine weitere Rückdrehung des Anschlag arms 44 um 30° durchführt. Diese nun insgesamt zweimalige Rückdrehung des Anschlagarms 44 um 30° ist insgesamt eine Rückdrehung um 60°, so daß die Kupplung 82 dadurch wiedereinrückbar ist, daß die Zähne 76 wiederum mit den Ausnehmungen 78 fluchten, vorausgesetzt, daß alle Ausnehmungen 78 aufeinanderfolgend einen Winkelabstand von 60° aufweisen und gleichfalls auch die Zähne 76. Diese Stellung ist in Fig. 6 dargestellt. Nach Erreichen der Ausgangsstellung des Anschlagarms 44 kann nun auch der Hydraulikkolben 108 wiederum zurückgezogen werden und die Klauenkupplung 82 wird einrücken, so daß wiederum bei der nächsten Spindeltrommelschaltung der Anschlagarm 44 in seiner Ausgangsstellung bleibt und synchron mit der Schaltspindeltrommel 20 weitergedreht wird.

Diese Stellung ist wiederum in Fig. 3 dargestellt, so daß die bereits beschriebenen Abläufe vcn neuem beginnen können.

Bei dieser synchronen Weiterschaltung des Anschlagarms 44 mit der Spindeltrommel besteht somit die Möglichkeit, während der gesamten Schaltzeit der Spindeltrommel die Materialstange 36 durch die Materialstangenzuführung 38 vorzuschieben und somit auch diese Schaltzeiten zu der Vorschubbewegung auszunützen, wobei die Anschlagfläche 46 sehr klein gehalten werden kann und maximal eine Querschnittsfläche aufweist, welche der der Materialstange 36 entspricht. Darüberhinaus besteht die Möglichkeit, die Anschlagfläche 46 in die Zwischenstellung, wie in Fig. 5 dargestellt, zu bewegen, so daß ungestört von dem Anschlagarm 44 Bearbeitungen in allen Spindelpositionen 26a bis f möglich sind.

Eine weitere Möglichkeit, mit der erfindungsgemäßen Vorrichtung zu arbeiten, ist in den Fig. 7 bis 9 dargestellt. Der Ausgangspunkt ist genau gleich gewählt wie bei der ersten Variante, so daß die Stellungen in Fig. 7 identisch sind mit den Stellungen in Fig. 3. Das heißt, daß der Anschlag 44 in Fig. 7 in seiner Ausgangsstellung vor der Spindelposition 26a in der Spindelstation I steht. Erfolgt nun mit dieser Ausgangsstellung eine Spindeltrommelschaltung aus der Spindelstation I weg zur Spindelstation II, so wird während der Trommelschaltung der Hydraulikkolben 110 betätigt und in Richtung auf die Kurvenbahn 86 zu bewegt, so daß bereits während der Spindeltrommelschaltung die Bahnfolgerrolle 102 die Schrägflächen 88 oder 90 beaufschlagt und die Klauenkupplung 82 ausrückt und folglich während der Spindeltrommelschaltung der Anschlagarm 44 in einer Endstellung festgehalten wird, welche gleichzeitig die Zwischenstellung ist, in welcher der Anschlagarm 44 nach Vollenden der Spindeltrommelschaltung mittig zwischen den Spindelpositionen 26a und 26f steht, wobei der Bahnfolger 102 im Tiefstpunkt 92 der Kurvenbahn 86 liegt und den Anschlagarm in der Zwischenstellung hält.

Ausgehend von dieser Zwischenstellung wird in gleicher Weise vorgegangen wie im vorhergehenden Verfahren, das heißt der Hydraulikkolben 108 wird in Richtung des Spindeltrommelgehäuses 14 bewegt und der Hydraulikkolben 110 zurückgezogen, so daß die Bahnfolgerrolle 100 die Schrägfläche 88 beaufschlagt, die Klauenkupplung 82 weiter außer Eingriff hält und den Kurventräger 88 entgegengesetzt zur Richtung der Spindeltrommelschaltung in eine Ausgangsstellung zurückbewegt, in welcher die Anschlagfläche 46 vor der Spindelposition 26 f steht. Nach Erreichen dieser Position wird auch der Hydraulikkolben 108 zurückgezogen, so daß die Klauenkupplung 82 wieder in Eingriff kommt und erneut eine Synchrondrehung des Anschlagarms 44 mit der Spindeltrommel 20 erfolgen kann.

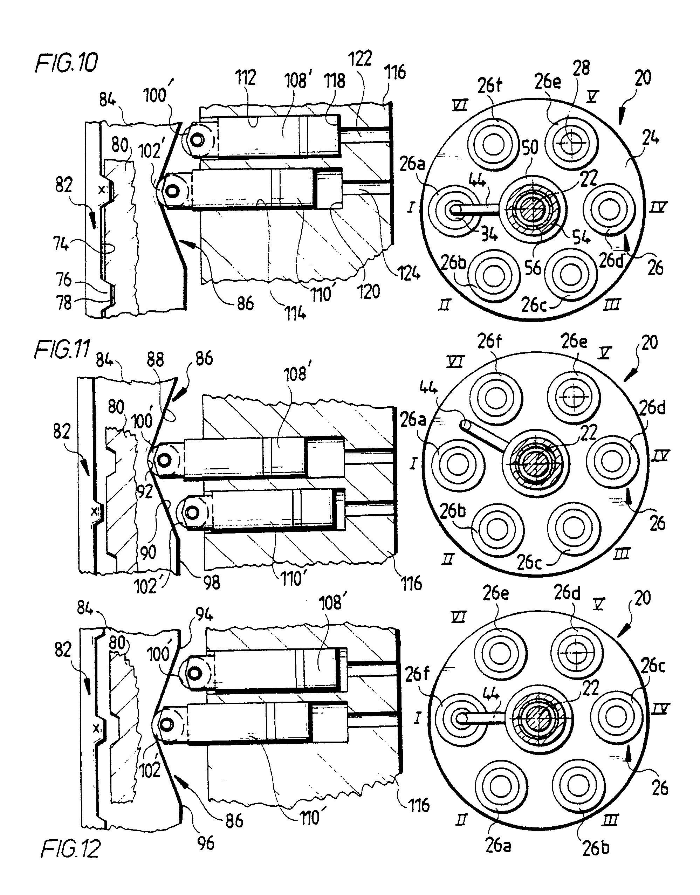

Alternativ zu der in den Fig. 7 bis 9 dargestellten Arbeitsweise, besteht auch noch die Möglichkeit, die Hydraulikkolben 108′ und 110′ so anzuordnen, daß die Bahnfolgerrolle 102′ in der Ausgangsstellung mit dem Tiefstpunkt 92 fluchtet, während der Hydraulikkolben 108′ um 30° entgegengesetzt zur Schaltrichtung versetzt angeordnet ist. Damit besteht die Möglichkeit, ausgehend von einer Ausgangsstellung, wie in Fig. 10 dargestellt, zunächst den Anschlagarm 44 entgegengesetzt zur Schaltrichtung der Trommel zurückzuverschwenken, und zwar durch Verschieben des Hydraulikkolbens 108' in Richtung des Spindeltrommelgehäuses 14 und Zurückziehen des Hydraulikkolbens 110'. Dadurch kommt die Bahnfolgerolle 100 auf der Schrägfläche 88 zur Anlage, rückt die Klauenkupplung 82 aus und dreht den Kurventräger 68 entgegengesetzt zur Schaltrichtung, so daß der Anschlagarm 44, wie in Fig. 11 dargestellt, in einer Zwischenstellung zwischen der Spindelposition 26a und 26f steht. Hierbei ist die Klauenkupplung 82 nach wie vor ausgerückt.

Um bei einer Spindeltrommelschaltung zu verhindern, daß der Anschlagarm 44 mit dem Werkstück in der Spindelposition 26f kollidiert, kann während der Spindeltrommelschaltung der Hydraulikkolben 110' in Richtung des Spindeltrommelgehäuses 14 auf die Kurvenbahn 86 zu bewegt werden und der Kolben 108' zurückgezogen werden, so daß eine Drehung des Kurventrägers 68 in Richtung der Spindeltrommelschaltung um 30° erfolgt, so daß, wie in Fig. 12 dargestellt, letztendlich der Anschlagarm 44 wieder in seiner Ausgangsstellung vor der Spindelposition 26f steht, in welcher beispielsweise wieder ein Einrücken der Klauenkupplung 82 denkbar ist.

Bei dieser Art des Betriebs kann während der Spindeltrommelschaltung kein Vorschub der Materialstange 36 erfolgen, sondern nur ein Vorschub derselben bei stehender Spindeltrommel 20 in einer der Spindelpositionen 26a bis f.

## Ansprüche

1. Mehrspindeldrehautomat mit einem Arbeitsraum, mit einer mehrere Spindeln in unterschiedlichen Spindelpositionen umfassenden Spindeltrommel, durch deren Drehung um eine Spindeltrommelachse die Spindeln in unterschiedlichen Spindelstationen eines Maschinengestells bringbar sind, mit einer mindestens einer Spindel zugeordneten Materialstangenvorschubeinrichtung und mit einem im Arbeitsraum angeordneten Anschlag, umfassend eine Anschlagfläche für eine Materialstange, **dadurch gekennzeichnet, daß der** Anschlag (44) konzentrisch zur Spindeltrommelachse (22) drehbar gelagert ist, und daß der Anschlag (44) während eines Materialstangenvorschubs relativ zur Spindeltrommel (20) in einer Ausgangsstellung feststellbar ist, in welcher die Anschlagfläche (46) eine Vorschubrichtung (48) der in der dieser Ausgangsstellung zugeordneten Spindelposition (26a, 26f) stehenden Materialstange (36) schneidet.
2. Mehrspindeldrehautomat nach Anspruch 1, dadurch gekennzeichnet, daß der Anschlag (44) in einer ersten Spindelstation (I) in die Ausgangsstellung überführbar ist.
3. Mehrspindeldrehautomat nach einem der voranstehenden Ansprüche, dadurch gekennzeichnet, daß der Anschlag (44) mit der Anschlagfläche (46) in einer Zwischenstellung zwischen zwei Spindelpositionen (26a, 26f) feststellbar ist.
4. Mehrspindeldrehautomat nach Anspruch 3, dadurch gekennzeichnet, daß der Anschlag (44) durch einen Rückstellantrieb (86, 100, 102) von der Ausgangsstellung in die Zwischenstellung schwenkbar ist.
5. Mehrspindeldrehautomat nach Anspruch 3 oder 4, dadurch gekennzeichnet, daß der Anschlag (44) mittels des Rückstellantriebs (86, 100, 102) in der Zwischenstellung feststellbar ist.
6. Mehrspindeldrehautomat nach einem der voranstehenden Ansprüche, dadurch gekennzeichnet, daß eine Drehbewegung des Anschlags (44) mit der Drehung der Spindeltrommel (20) synchronisierbar ist.
7. Mehrspindeldrehautomat nach einem der Ansprüche 1 bis 6, dadurch gekennzeichnet, daß der Anschlag (44) in der Ausgangsstellung aus der ersten Spindelstation (I) heraus in Richtung der nächstfolgenden zweiten Spindelstation (II) synchron mit der Spindeltrommel (20) drehbar ist.
8. Mehrspindeldrehautomat nach Anspruch 7, dadurch gekennzeichnet, daß der Anschlag (44) bis zu einer Endstation drehbar ist.
9. Mehrspindeldrehautomat nach Anspruch 8, dadurch gekennzeichnet, daß die Endstation maximal in der nächstfolgenden Spindelstation (II) liegt.
10. Mehrspindeldrehautomat nach einem der Ansprüche 8 oder 9, dadurch gekennzeichnet, daß die synchrone Drehung von Anschlag (44) und Spindeltrommel (20) bei Erreichen der Endstation beendbar ist.
11. Mehrspindeldrehautomat nach Anspruch 10, dadurch gekennzeichnet, daß der Anschlag (44) bei Erreichen der Endstation in die Zwischenstellung überführbar ist.
12. Mehrspindeldrehautomat nach einem der Ansprüche 8 bis 11, dadurch gekennzeichnet, daß ein Rückstellantrieb (86, 100, 102) zum Drehen des Anschlags (44) von der Endstation (II) in die vorausgehende Spindelstation (I) vorgesehen ist.
13. Mehrspindeldrehautomat nach einem der Ansprüche 4 bis 12, dadurch gekennzeichnet, daß der Rückstellantrieb (86, 100, 102) hydraulisch arbeitet.
14. Mehrspindeldrehautomat nach einem der Ansprüche 6 bis 13, dadurch gekennzeichnet, daß die synchrone Drehung des Anschlags (44) durch eine Klauenkupplung (82) zwischen diesem und der Spindeltrommel (20) erfolgt.
15. Mehrspindeldrehautomat nach Anspruch 14, dadurch gekennzeichnet, daß die Klauenkupplung (82) bei Betätigung des Rückstellantriebs (86, 100, 102) ausrückbar ist.

16. Mehrspindeldrehautomat nach Anspruch 14 oder 15, dadurch gekennzeichnet, daß die Klauenkupplung (82) in Richtung einer eingekuppelten Stellung federbeaufschlagt ist.

17. Mehrspindeldrehautomat nach einem der voranstehenden Ansprüche, dadurch gekennzeichnet, daß der Anschlag (44) auf einem Zentralrohr (56) der Spindeltrommel (20) gelagert ist.

18. Mehrspindeldrehautomat nach Anspruch 17, dadurch gekennzeichnet, daß der Anschlag (44) von einem das Zentralrohr (56) umgebenden Schwenkrohr (52) getragen ist.

19. Mehrspindeldrehautomat nach einem der Ansprüche 4 bis 18, dadurch gekennzeichnet, daß der Rückstellantrieb eine Kurvenbahn (86) und einen Bahnfolger (100, 102) umfaßt, welche zum Drehen des Anschlags (44) aufeinanderzu bewegbar sind.

20. Mehrspindeldrehautomat nach Anspruch 19, dadurch gekennzeichnet, daß die Kurvenbahn (86) einen definierten Tiefstpunkt(92) für den Bahnfolger (100, 102) aufweist.

21. Mehrspindeldrehautomat nach einem der Ansprüche 19 oder 20, dadurch gekennzeichnet, daß die Kurvenbahn (86) um die Spindeltrommelachse (22) herum verläuft und einen in Richtung der Spindeltrommelachse (22) variablen Kurvenverlauf aufweist.

22 Mehrspindeldrehautomat nach einem der Ansprüche 19 bis 21, dadurch gekennzeichnet, daß die Kurvenbahn (86) an einem Kurventräger (68) angeordnet ist.

23. Mehrspindeldrehautomat nach Anspruch 22, dadurch gekennzeichnet, daß der Kurventräger (68) ein konzentrisch zur Spindeltrommelachse (22) verlaufender Ring ist.

24. Mehrspindeldrehautomat nach Anspruch 22 oder 23, dadurch gekennzeichnet, daß der Kurventräger (68) drehfest, jedoch in Richtung der Spindeltrommelachse (22) verschieblich mit dem Anschlag (44) verbunden ist.

25. Mehrspindeldrehautomat nach einem der Ansprüche 22 bis 24, dadurch gekennzeichnet, daß der Kurventräger (68) ein Element der Klauenkupplung (82) trägt.

26. Mehrspindeldrehautomat nach einem der Ansprüche 19 bis 25, dadurch gekennzeichnet, daß der Bahnfolger (100, 102) maschinengestellfest angeordnet ist.

27. Mehrspindeldrehautomat nach einem der Ansprüche 19 bis 26, dadurch gekennzeichnet, daß der Bahnfolger (100, 102) an einem Ende eines Hydraulikkolbens (108, 110) angeordnet ist.

28. Mehrspindeldrehautomat nach Anspruch 27, dadurch gekennzeichnet, daß der Hydraulikkolben (108, 110) in einem um die Spindeltrommelachse (22) herumlaufenden Gehäusering (116) gelagert ist.

29. Mehrspindeldrehautomat nach einem der Ansprüche 19 bis 28, dadurch gekennzeichnet, daß zwei Bahnfolger (100, 102) in einem Winkelabstand voneinander angeordnet sind.

30. Mehrspindeldrehautomat nach Anspruch 29, dadurch gekennzeichnet, daß der Winkelabstand dem halben Winkelabstand aufeinanderfolgender Spindelpositionen (26a, 26b) entspricht.

31. Mehrspindeldrehautomat nach einem der Ansprüche 19 bis 30, dadurch gekennzeichnet, daß die Kurvenbahn (86) im wesentlichen V-förmig zueinander angeordnete Schrägflächen (88, 90) aufweist.

32. Mehrspindeldrehautomat nach Anspruch 31, dadurch gekennzeichnet, daß die äußersten Enden (94, 96) der Schrägflächen (88, 90) der Kurvenbahn (86) einen Winkelabstand voneinander aufweisen, welcher mindestens dem Winkelabstand aufeinanderfolgender Spindelpositionen (26a, 26b) entspricht.

33. Mehrspindeldrehautomat nach einem der voranstehenden Ansprüche, dadurch gekennzeichnet, daß der Anschlag (44) in Richtung der Spindeltrommelachse unverschieblich festlegbar ist.

34. Mehrspindeldrehautomat nach einem der voranstehenden Ansprüche, dadurch gekennzeichnet, daß die Zahl der Anschläge (44) der Zahl der mit einer Materialstangenvorschubeinrichtung (38) versehenen Spindeln (26) entspricht.

35. Mehrspindeldrehautomat nach Anspruch 34, dadurch gekennzeichnet, daß die Anschläge (44) auf einem gemeinsamen Anschlagträger (52) sitzen.

FIG.1

EP 0 417 530 A1

FIG.2

FIG.3

FIG.4

FIG.5

FIG.6

FIG.7

FIG.8

FIG.9

FIG.10

FIG.11

FIG.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| A | DE - B2 - 2 243 406<br>(ACHE-CLEVELAND CORP.)<br>* Gesamt *<br>-- | 1 | B 23 B 9/04 |
| A | DD - A - 135 451<br>(LANGER)<br>* Gesamt *<br>-- | 1 | |
| A | US - A - 3 661 042<br>(LENDER)<br>* Fig. 3; Spalte 3, Zeilen 26-35 *<br>-- | 1 | |
| A | US - A - 4 208 772<br>(EARNHARDT)<br>* Gesamt *<br>---- | 1 | |

|  |
|---|
| **RECHERCHIERTE SACHGEBIETE (Int. Cl⁵)** |
| B 23 B 9/00<br>B 23 B 13/00 |

Der vorliegende Recherchenbericht wurde für alle Patentansprüche erstellt.

| Recherchenort | Abschlußdatum der Recherche | Prüfer |
|---|---|---|
| WIEN | 17-12-1990 | LEBZELTERN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 62